# EUROPÄISCHE PATENTSCHRIFT

(11) **EP 1 278 624 B1**
(45) Veröffentlichungstag und Bekanntmachung des Hinweises auf die Patenterteilung: **29.09.2004**
(21) Anmeldenummer: 01943004.0
(22) Anmeldetag: 30.04.2001
(51) Int. Cl.: B29C 45/40

(54) **EINRICHTUNG ZUM ENTFERNEN VON SPRITZGIESSTEILEN**
DEVICE FOR REMOVING INJECTION MOULDED PARTS
DISPOSITIF DESTINE A RETIRER DES PIECES DE MOULAGE PAR INJECTION

(30) Priorität: 03.05.2000 DE 10022192
(43) Veröffentlichungstag der Anmeldung: 29.01.2003
(73) Patentinhaber: Mannesmann Plastics Machinery GmbH, 80997 München (DE)
(72) Erfinder: BECKER, Klaus, 58300 Wetter (DE); OSTHOLT, Rüdiger, 58300 Wetter (DE)
(74) Vertreter: Meissner, Peter E., Dipl.-Ing.
(86) Internationale Anmeldenummer: PCT/DE2001/001668
(87) Internationale Veröffentlichungsnummer: WO 2001/083192

(56) Entgegenhaltungen:
- EP-A- 0 724 944
- EP-A- 0 853 537
- DE-A- 4 228 140
- DE-U- 29 722 964
- PATENT ABSTRACTS OF JAPAN vol. 2000, no. 11, 3. Januar 2001 (2001-01-03) -& JP 2000 218673 A (SUMITOMO HEAVY IND LTD), 8. August 2000 (2000-08-08)

## Beschreibung

Die Erfindung betrifft eine Einrichtung zum Entfernen von Spritzgießteilen aus der Form einer eine bewegliche und eine feste Werkzeugaufspannplatte aufweisenden Spritzgießmaschine insbesondere für Kunststoffe mit einer Antriebseinheit, durch die ein Betätigungselement linear zur Form hin und von dieser wegbewegbar ist.

Aus EP 0 724 944 ist eine Auswerfereinheit bekannt, bei der ein Servomotor, der an der beweglichen Werkzeugaufspannplatte befestigt ist, einen Stator und einen Rotor aufweist, wobei an dem Rotor eine Hohlwelle befestigt ist, die eine Kugelspindelmutter besitzt, durch die eine Kugelspindelwelle vorwärts und rückwärts bewegbar ist.

Aus DE-29722964-U ist eine Auswerfereinheit für eine Spritzgießmaschine bekannt, bei der die Spindel starr mit der Auswerferplatte verbunden ist und eine Mutter trägt, die über einen Elektromotor drehbar ist.

Bei den vorgenahnten Auswerfereinheiten sind in nachteiliger Weise der konstruktiven Gestaltung der Kugelspindelmutter Grenzen gesetzt, da diese zusammen mit der Hohlwelle bezüglich ihres Außendurchmessers möglichst klein bauen soll.

Aus DE 42 28 140 A1 ist eine Auswerfereinheit bekannt, bei der auf einer an der Formträgerplatte ansetzbaren Basis als Auswerferantrieb ein Elektromotor sitzt, der mit mehreren drehantreibbaren Gewindespindeln in ständiger Stellverbindung steht, wobei auf den Gewindespindeln eine Auswerferplatte über Muttergewinde verstellbar ist und die Auswerferplatte einen die Basis und die Formträgerplatte durchgreifenden Auswerferstempel trägt.

Diese Ausgestaltung ist mit dem Nachteil behaftet, dass durch Anordnung des Elektromotors und der Getriebeeinrichtung ein hoher Platzbedarf vorhanden ist.

Aus EP 0 853 537 B1 ist eine Einrichtung zur Behandlung und/oder Entfernung von Spritzteilen an einer Spritzgießmaschine zur Verarbeitung plastifizierbarer Materialien bekannt, deren Antriebseinheit ein das Betätigungselement zumindestens teilweise in sich aufnehmender Hohlwellenmotor ist, wobei die Einrichtung sich an einem Abstützelement an der Formschließeinrichtung abstützt.
Mittig zur Spritzachse der Spritzgießmaschine ist ein Raum zur Anordnung eines Auswerfers, eines Kernziehers oder eines Ausschraubmechanismus, also eine Einrichtung zur Behandlung und/oder Entfernung von Spritzteilen, vorgesehen.

Durch die Anordnung des Abstützelementes ist bei der vorgeschlagenen Auswerfereinrichtung ein relativ großer Raum erforderlich, was zu Behinderungen auf der Schließseite der Spritzgießmaschine führt.

In Kenntnis des o.g. Standes der Technik verfolgt die Erfindung das Ziel, eine Einrichtung zum Entfernen von Spritzgießteilen einer Spritzgießmaschine insbesondere für Kunststoffe zu schaffen, die bei konstruktiv einfachem, dabei aber robustem Aufbau ein geringes Bauvolumen aufweisend die Spritzgießteile aus der Form einer Spritzgießmaschine sicher entfernt.

Die Erfindung erreicht dieses Ziel durch die Merkmale des Anspruchs 1. Die nachfolgenden Ansprüche sind vorteilhafte Weiterbildungen der Erfindung.

Erfindungsgemäß sind die Ausstoßstangen zum Entfernen der Spritzgießteile aus der Form einer Spritzgießmaschine mit einer Spindel verbunden, an der eine Zahnscheibe befestigt ist. Diese Zahnscheibe korrespondiert mit einem sie umhüllenden rohrförmigen Bauteil, durch welches die Zahnscheibe und damit die Spindel bei gleichzeitiger, ungehinderter axialer Beweglichkeit radial verdrehbar ist. Die Spindel steht mit einem Eingriffsbauteil in Verbindung, welches als Spindelmutter ausgestaltet ist oder einzelne bewegliche Gleitelemente aufweist und für das beliebiger Bauraum vorhanden ist. So kann insbesondere die Mutter bezüglich ihrer Festigkeit großzügig ausgestaltet sein, da nahezu keine Begrenzung in ihrem Außendurchmesser vorliegt. Weiterhin ist bei der hier vorgeschlagenen dimensionsgerechten Bauweise eine besondere Geräuscharmut zu erwarten.

Hierbei kann die Mutter im Gehäuse zusammen mit dem antreibbaren rohrförmigen Bauteil angeordnet sein, sie kann aber auch in einer vorteilhaften Anordnung in der beweglichen Werkzeugaufspannplatte eingebaut werden. Bei der letztgenannten Version ist eine besonders kurze Bauweise der Auswerfeinrichtung verwirklicht, da nur noch der elektrische Antrieb, sei es als elektrischer Hohlwellenmotor oder als über Zahnräder angetriebener elektrischer Antriebsmotor, an der Außenseite der beweglichen Werkzeugaufspannplatte angeordnet ist.

In einer weiteren vorteilhaften Ausgestaltung sind das Eingriffsbauteil, das rohrförmige Bauteil und die Antriebseinheit als kompakte Baueinheit zusammengefasst, die an der beweglichen Werkzeugaufspannplatte lösbar befestigt ist.

Bei der Anordnung des Zahnrades auf der der beweglichen Werkzeugaufspannplatte zugewandten Seite wird die nach außen ragende Spindel von dem Antriebsmotor und dem die Spindelmutter umhüllenden Gehäuse umgeben oder es wird ein Balg vorgesehen, dessen Mündung von einem Deckel abgedeckt ist, der an der Stirn der Spindel drehbar gelagert ist. Bei Einsatz eines Balges ist stets der geringstmögliche Bauraum nur belegt.

Beim Einsatz von mehreren Ausstoßstangen werden diese über eine Traverse miteinander verbunden, wobei zwischen der Stirn der Spindel und der Traverse ein Drucklager angeordnet ist.

Ein Beispiel der Erfindung ist in der beigefügten Zeichnung dargelegt. Dabei zeigen die
- Figur 1: Eine Baueinheit mit Hohlwellenmotor in Rotor/Mutteranordnung.
- Figur 2: Eine Baueinheit mit Hohlwellenmotor in Mutter/Rotoranordnung.
- Figur 3: Einen Hohlwellenmotor mit einer verschiedene Steigungen aufweisenden Spindel.
- Figur 4: Antrieb der Hülse über kompakte Motore und Balg als Spindelschutz.

In den einzelnen Figuren ist schematisch eine bewegliche Werkzeugaufspannplatte 11 dargestellt, die bei Einsatz nur einer Ausstoßstange 24 eine Bohrung 13 aufweist.

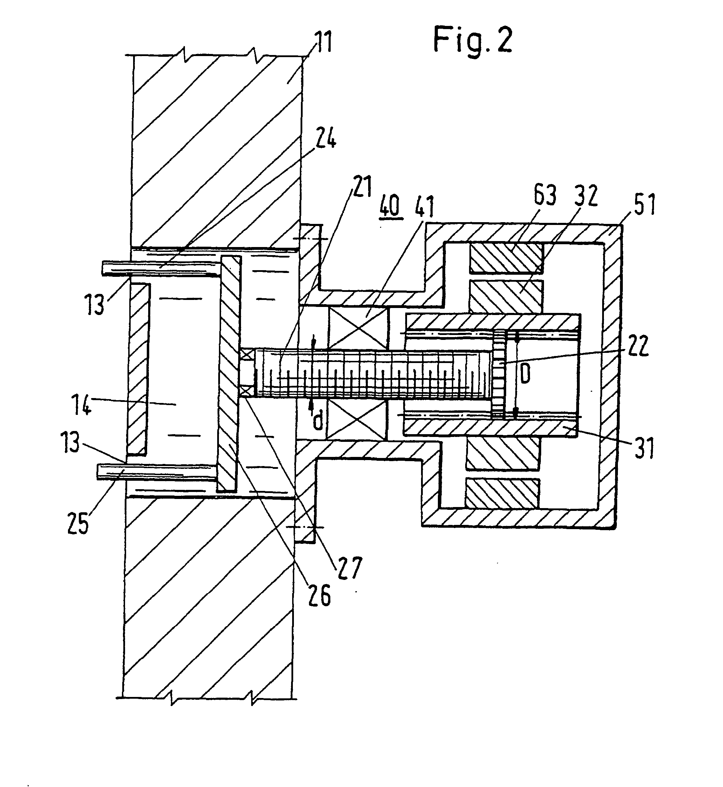

Weiterhin ist bei allen Figuren eine Spindel 21 dargestellt, bei der an einer Stirnseite eine Zahnscheibe 22 befestigt ist. Die Zahnscheibe 22 weist dabei einen Außendurchmesser D, der größer ist als der Außendurchmesser d der Spindel 22 (siehe Figur 2).

Die Spindel korrespondiert mit einem Eingriffsbauteil 40, welches entweder als Spindelmutter 41 ausgestaltet ist oder aus Gleitelementen 42 aufgebaut ist.

Die Zähne der Zahnscheibe 22 korrespondieren mit einer Innenverzahnung des rohrförmigen Bauteils 31. Die Zahnscheibe 22 ist dabei lateral frei bewegbar und radial kraftmäßig drehbar.

Das rohrförmige Bauteil 31 ist dabei entweder mit einem Rotor 32 eines Hohlwellenmotors 43 oder über eine Verzahnung 33 mit dem Abtriebszahnrad eines elektrischen Antriebsmotors 62 verbunden.

Die Antriebseinheit ist jeweils von einem Gehäuse 51 umhüllt.

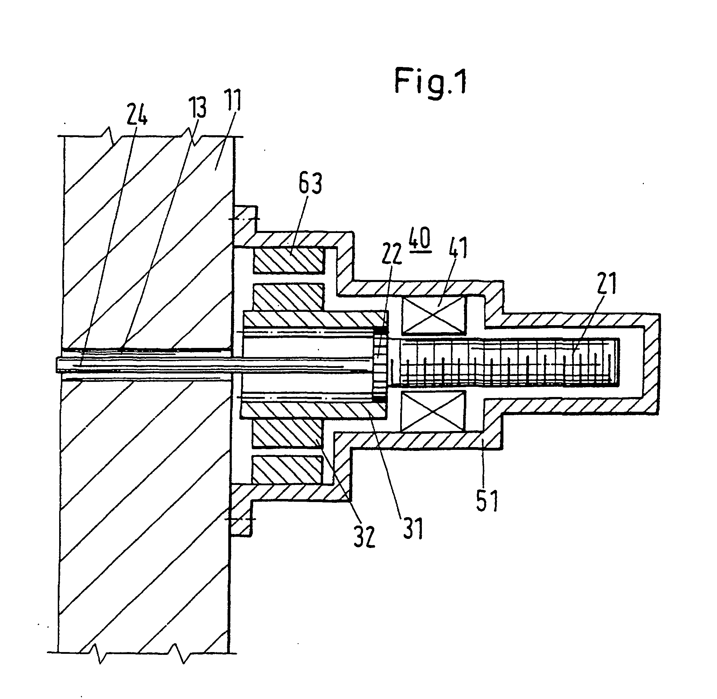

In der Figur 1 ist ein Hohlwellenmotor vorgesehen, der in dem der beweglichen Werkzeugaufspannplatte zugeneigten Bereich der Ausstoßeinrichtung angeordnet ist.
Im gleichen Gehäuse 51, welches den Hohlwellenmotor 63 umhüllt, ist die Spindelmutter 41 vorgesehen.
Das freie herausragende Ende der Spindel 21 ist ebenfalls von dem Gehäuse 51 umhüllt.

Bei dieser Bauweise wird der größte Durchmesser der Ausstoßeinheit in der Nähe der Außenseite der Werkzeugaufspannplatte 11 angeordnet, so dass die nur geringeren Durchmesser aufweisenden Bauteile platzsparend in den Freiraum hineinragen.

In der Figur 2 ist der Hohlwellenmotor 63 und die Spindelmutter 21 als Baueinheit von einem Gehäuse 51 umhüllt, wobei die Spindelmutter 21. der beweglichen Werkzeugaufspannplatte 11 zugeneigt ist.

Bei der vorliegenden Ausgestaltung ragt ein Teil der Spindel 21 in eine mit der beweglichen Werkzeugaufspannplatte 11 vorgesehene Öffnung 14 hinein. Diese Öffnung 14 steht in Verbindung mit zwei Bohrungen 13, durch die Ausstoßstangen 24, 25 führbar sind. Die Ausstoßstangen 24 und 25 sind über eine Traverse 26 miteinander verbunden. Zwischen der Traverse 26 und der Spindel 21 ist ein Drucklager 27 angeordnet.

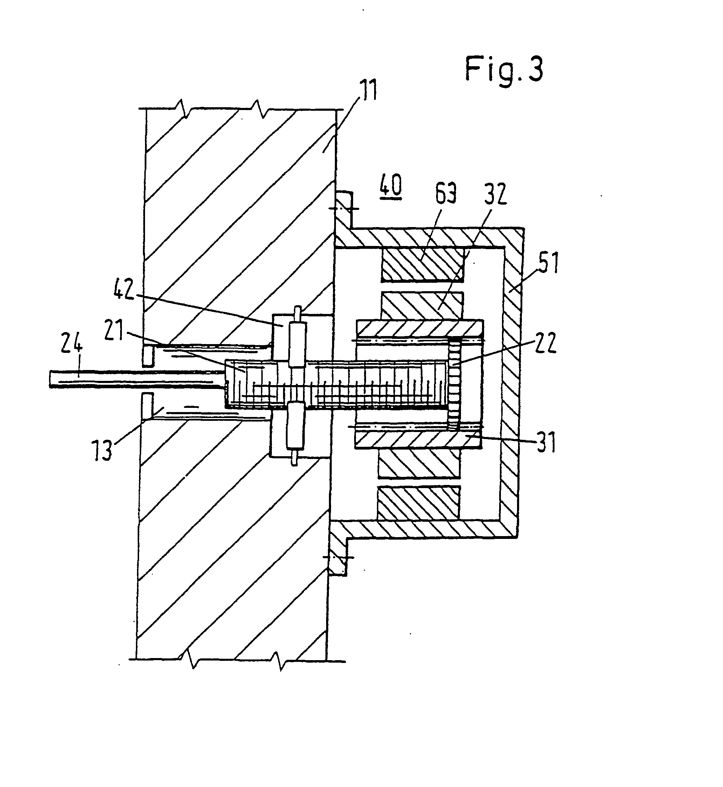

In der Figur 3 ist das Eingriffsbauteil 40 in der beweglichen Werkzeugaufspannplatte 11 angeordnet. Im vorliegenden Fall weist das Eingriffsbauteil 40 mehrere Gleitelemente 42 auf, die mit der Spindel 21 korrespondieren. Die Gleitelemente 42 sind dabei winkelbeweglich gelagert, so dass eine Spindel 21 eingesetzt werden kann, die eine veränderliche Steigung besitzt.

In der vorliegenden Ausgestaltung der Ausstoßvorrichtung ist außerhalb der beweglichen Werkzeugaufspannplatte 11 nur noch der hier als Hohlwellenmotor 63 ausgestaltete Antrieb einschließlich Rotor 32 und rohrförmigem Bauteil 31 umgeben von dem Gehäuse 51 angeordnet. Hierdurch ergibt sich eine äußerst kompakte und platzsparende Einheit.

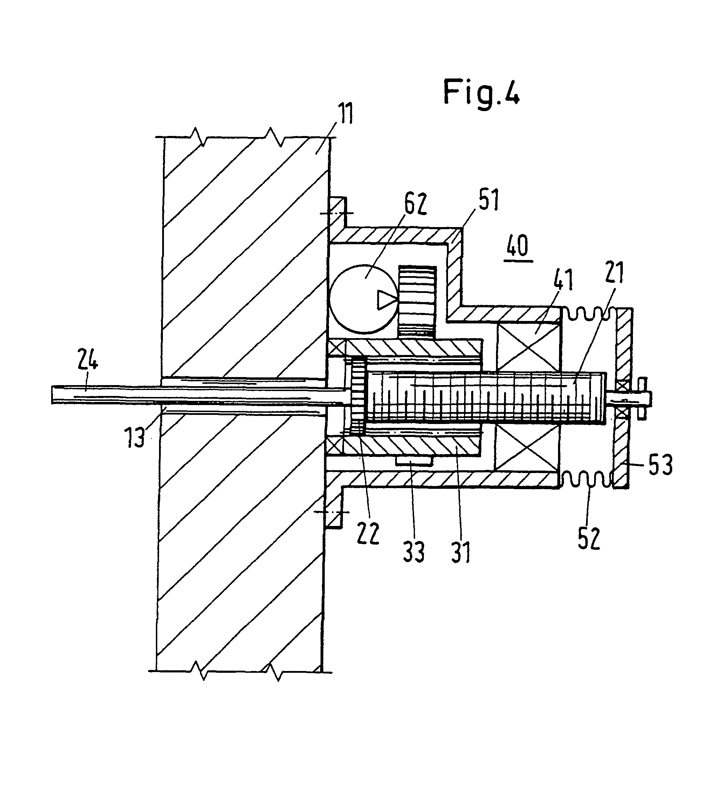

In der Figur 4 wird das rohrförmige Bauteil 31 von einem elektrischen Antriebsmotor 62 angetrieben. Nicht dargestellt ist der Einsatz eines Riemens.

Im vorliegenden Fall wird der aus der Spindelmutter 41 herausragende Teil der Spindel 21 von einem Balg 52 umhüllt. Der Boden des Balges 52 ist von einer Bodenplatte 53 abgedeckt, die drehbar gelagert an der Spindel 21 befestigt ist. Auf diese Weise wird der Freiraum immer nur dann belegt, wenn die Spindel tatsächlich in diesen Raum hineinragt.

### Positionsliste

### Spritzgießmaschine

- 11: Bewegliche Werkzeugaufspannplatte
- 12: Feste Werkzeugaufspannplatte
- 13: Bohrung
- 14: Öffnung

### Ausstoßen

- 21: Spindel
- 22: Zahnscheibe
- 24, 25: Ausstoßstange
- 26: Traverse
- 27: Drucklager

### Antreiben

- 31: Rohrförmiges Bauteil
- 32: Rotor
- 33: Verzahnung
- (34): Riemen

### Eingriffsbauteil

- 40: Eingriffsbauteil
- 41: Spindelmutter
- 42: Gleitelemente

### Schützen

- 51: Gehäuse
- 52: Balg
- 53: Bodenplatte

### Motor

- 61: Antriebseinheit
- 62: Elektrischer Antriebsmotor
- 63: Hohlwellenmotor
- D: Durchmesser Zahnscheibe
- d: Durchmesser Spindel

## Patentansprüche

1. Einrichtung zum Entfernen von Spritzgießteilen aus der Form einer eine bewegliche und eine feste Werkzeugaufspannplatte aufweisenden Spritzgießmaschine insbesondere für Kunststoffe, mit einer Antriebseinheit, durch die ein Betätigungselement, das mit einer Spindel (21) verbunden ist, linear zur Form hin und von dieser weg bewegbar ist, wobei ein Eingriffsbauteil (40) vorgesehen ist, durch das die Spindel (21) axial bewegbar ist,
**dadurch gekennzeichnet,**
**dass** an einem Ende der Spindel (21) eine Zahnscheibe (22) befestigt ist, deren Durchmesser (D) den Außendurchmesser (d) der Spindel (21) überragt,
**dass** die Zahnscheibe (22) mit einem rohrförmigen Bauteil (31) korrespondiert, welches die Spindel (21) frei beweglich umhüllend von der Antriebseinheit (61) antreibbar ist, und
**dass** das Eingriffsbauteil (40) mit der beweglichen Werkzeugaufspannplatte (11) in Verbindung steht.

2. Einrichtung nach Anspruch 1,
**dadurch gekennzeichnet,**
**dass** das Eingriffsbauteil (40) eine Spindelmutter (41) ist.

3. Einrichtung nach Anspruch 1,
**dadurch gekennzeichnet,**
**dass** das Eingriffsbauteil (40) Gleitelemente (42) aufweist, mit denen eine unterschiedliche Steigung aufweisende Spindel (21) axial bewegbar ist.

4. Einrichtung nach den Ansprüchen 2 oder 3,
**dadurch gekennzeichnet,**
**dass** das Eingriffsbauteil (40) unmittelbar an der beweglichen Werkzeugaufspannplatte (11) befestigt ist.

5. Einrichtung nach Anspruch 1,
**dadurch gekennzeichnet,**
**dass** das rohrförmige Bauteil (31) mit dem Rotor (32) eines Hohlwellenmotors (63) verbunden ist.

6. Einrichtung nach Anspruch 1,
**dadurch gekennzeichnet,**
**dass** an der Außenseite des rohrförmigen-Bauteils (31) eine Verzahnung (33) vorgesehen ist, die mit einem vorzugsweise elektrischen Antriebsmotor (62) in Verbindung steht.

7. Einrichtung nach Anspruch 1,
**dadurch gekennzeichnet,**
**dass** das rohrförmige Bauteil (31) über einen Riemen in Rotation bringbar ist.

8. Einrichtung nach einem der Ansprüche 5 bis 7,
**dadurch gekennzeichnet,**
**dass** das rohrförmige Bauteil (31) unmittelbar an der beweglichen Werkzeugaufspannplatte (11) gelagert ist.

9. Einrichtung nach einem der vorgenannten Ansprüche,
**dadurch gekennzeichnet,**
**dass** das Eingriffsbauteil (40), das rohrförmige Bauteil (31) und die Antriebseinheit (41), von einem gemeinsamen Gehäuse (51) umhüllt, eine an der beweglichen Werkzeugaufspannplatte (11) lösbar befestigte Baueinheit ist.

10. Einrichtung nach mindestens einem der Ansprüche 1 bis 9,
**dadurch gekennzeichnet,**
**dass** bei Einsatz mehrerer über eine Traverse (26) verbundener Ausstoßstangen (24, 25) zwischen der Traverse (26) und der Stirn der Spindel (21) ein Drucklager (27) vorgesehen ist.

11. Einrichtung nach mindestens einem der vorgenannten Ansprüche,
**dadurch gekennzeichnet,**
**dass** die der beweglichen Werkzeugaufspannplatte (11) entgegengesetzte Seite der Spindel (21) von einem Balg (52) umhüllbar ist.

## Claims

1. A means for removing injection-moulded parts from the mould of an injection-moulding machine comprising a movable and a fixed platen, in particular for plastics, with a drive unit by means of which an actuating element which is connected to a spindle (21) can be moved linearly towards and away from the mould, with an engagement component (40) being provided by means of which the spindle (21) is axially moveable,
**characterised in that**
a toothed disc (22) is fastened to one end of the spindle (21), the diameter (D) of which disc protrudes beyond the external diameter (d) of the spindle (21),
the toothed disc (22) corresponds with a tubular component (31) which can be driven, surrounding the spindle (21) in freely moveable manner, by the drive unit (61), and
that the engagement component (40) is connected to the moveable platen (11).

2. A means according to Claim 1, **characterised in that** the engagement component (40) is a spindle nut (41).

3. A means according to Claim 1, **characterised in that** the engagement component (40) has sliding elements (42) by means of which a spindle (21) having a different pitch is axially moveable.

4. A means according to Claims 2 or 3, **characterised in that** the engagement component (40) is fastened directly to the movable platen (11).

5. A means according to Claim 1, **characterised in that** the tubular component (31) is connected to the rotor (32) of a hollow-shaft motor (63).

6. A means according to Claim 1, **characterised in that** teeth (33) are provided on the outside of the tubular component (31), which are engaged with a preferably electric drive motor (62).

7. A means according to Claim 1, **characterised in that** the tubular component (31) can be caused to rotate by means of a belt.

8. A means according to one of Claims 5 to 7, **characterised in that** the tubular component (31) is mounted directly on the moveable platen (11).

9. A means according to one of the preceding claims, **characterised in that** the engagement component (40), the tubular component (31) and the drive unit (41), surrounded by a common housing (51), form a structural unit detachably fastened to the moveable platen (11).

10. A means according to at least one of Claims 1 to 9, **characterised in that** when using a plurality of ejector rods (24, 25) connected via a crossbar (26), a thrust bearing (27) is provided between the crossbar (26) and the end face of the spindle (21).

11. A means according to at least one of the preceding claims, **characterised in that** the side of the spindle (21) at the opposite end from the moveable platen (11) can be surrounded by a bellows (52).

## Revendications

1. Dispositif servant à retirer des pièces injectées du moule d'une presse d'injection comportant une plaque de fixation d'outil mobile et une plaque de fixation d'outil fixe, notamment pour matières plastiques, ayant une unité d'entraînement par laquelle un élément d'actionnement, lequel est relié à une broche (21), peut être déplacé de manière linéaire par rapport au moule de façon à s'en approcher et s'en s'éloigner, un élément de prise (40) étant prévu, à travers lequel la broche (21) peut être déplacée axialement,
**caractérisé en ce qu'**un disque denté (22), dont le diamètre (D) dépasse le diamètre extérieur (d) de la broche (21), est fixé à l'une des extrémités de la broche (21), **en ce que** le disque denté (22) est en correspondance avec un élément tubulaire (31), lequel, enveloppant de façon librement mobile la broche (21), peut être entraîné par l'unité d'entraînement (61), et **en ce que** l'élément de prise (40) est en relation avec la plaque de fixation d'outil mobile (11).

2. Dispositif selon la revendication 1,
**caractérisé en ce que** l'élément de prise (40) est un écrou à broche (41).

3. Dispositif selon la revendication 1,
**caractérisé en ce que** l'élément de prise (40) présente des éléments de glissement (42), avec lesquels une broche (21) comportant un pas différent peut être déplacée axialement.

4. Dispositif selon la revendication 2 ou 3,
**caractérisé en ce que** l'élément de prise (40) est directement fixé sur la plaque de fixation d'outil mobile (11).

5. Dispositif selon la revendication 1,
**caractérisé en ce que** l'élément tubulaire (31) est relié au rotor (32) d'un moteur à arbre creux (63).

6. Dispositif selon la revendication 1,
**caractérisé en ce que**, sur le côté extérieur de l'élément tubulaire (31), il est prévu une denture (33), laquelle est en relation avec un moteur d'entraînement (62), de préférence électrique.

7. Dispositif selon la revendication 1,
**caractérisé en ce que** l'élément tubulaire (31) peut être amené en rotation par l'intermédiaire d'une courroie.

8. Dispositif selon l'une des revendications 5 à 7,
**caractérisé en ce que** l'élément tubulaire (31) est monté directement sur la plaque de fixation d'outil mobile (11).

9. Dispositif selon l'une des revendications précédentes,
**caractérisé en ce que** l'élément de prise (40), l'élément tubulaire (31) et l'unité d'entraînement (41), enveloppés par un carter commun (51), forment un ensemble fixé de manière amovible sur la plaque de fixation d'outil mobile (11).

10. Dispositif selon au moins l'une des revendications 1 à 9,
**caractérisé en ce que**, dans le cas de l'utilisation de plusieurs tiges d'éjection (24, 25) reliées par l'intermédiaire d'une traverse (26), il est prévu entre la traverse (26) et l'avant de la broche (21) un palier de poussée (27).

11. Dispositif selon au moins l'une des revendications précédentes,
**caractérisé en ce que** le côté de la broche (21), opposé à la plaque de fixation d'outil mobile (11), peut être enveloppé d'un soufflet (52).
